(19) Europäisches Patentamt
European Patent Office
Office européen des brevets

(11) **EP 1 591 764 B1**

(12) **EUROPEAN PATENT SPECIFICATION**

(45) Date of publication and mention
of the grant of the patent:
**29.08.2007 Bulletin 2007/35**

(51) Int Cl.:
***G01K 11/22*** (2006.01)   ***H04M 1/21*** (2006.01)

(21) Application number: **05009508.2**

(22) Date of filing: **29.04.2005**

(54) **Acoustic-based temperature sensing in telephones**

Auf Akustik basierende Temperaturmessung in Telefonen

Mesure de la température par onde acoustique dans un téléphone

(84) Designated Contracting States:
**DE GB**

(30) Priority: **30.04.2004 US 835783**

(43) Date of publication of application:
**02.11.2005 Bulletin 2005/44**

(73) Proprietor: **Avaya Technology Corp.**
**Basking Ridge, NJ 07920 (US)**

(72) Inventors:
• **Elko, Gary W**
**Summit**
**New Jersey 07901 (US)**
• **Matula, Valentine C,**
**Granville**
**Ohio 43023 (US)**
• **Diethorn, Eric J.**
**Long Valley**
**New Jersey 07853 (US)**

(74) Representative: **Epping - Hermann - Fischer**
**Ridlerstrasse 55**
**80339 München (DE)**

(56) References cited:
**DE-A1- 19 902 304    DE-U1- 20 302 077**
**JP-A- 54 102 181**

## Description

### 1. Field of the Invention

The present invention relates to a communication device having temperature sensing capabilities.

### 2. Description of the Related Art

Communication devices such as mobile phones, Personal Digital Assistants (PDAs), and stationary phones typically do not have temperature sensing capabilities. Users of these communication devices will rely on external conventional temperature sensing devices such as thermometers and temperature probes to determine ambient temperatures. These conventional temperature sensing devices are installed in various locations for monitoring ambient temperatures and/or for monitoring temperatures indicative of a fire. Instead of relying on these fixed external temperature sensing devices, it is desirable in some cases for a user to determine the ambient temperature of an immediate area. Using conventional thermometers and/or temperature sensing devices to measure all immediate areas in which a user could be located would require the installation of many temperature sensing devices and is cost intensive, especially if many areas are to be measured.

If conventional temperature sensing devices such as thermometers and temperature probes are added to existing mobile communication devices to provide a temperature measurement function for measuring the temperature of the environment in which the communication device is located, an additional cost to the device is incurred. Furthermore, the thermometer or temperature probe must be arranged on the communication device so that user interaction with the device does not affect the temperature reading. Accordingly, the incorporation of a temperature measurement device may incur an additional design cost.

If centralized monitoring of temperature is desired, conventional temperature sensing devices must be connected to a separate communication network or a costly integration module must be added to the temperature sensors so that the temperature information detected by the temperature sensing devices may be communicated to a central monitoring area using existing communication networks.

### SUMMARY OF THE INVENTION

An object of the present invention is to provide temperature monitoring capabilities to a communication device without requiring the addition of a dedicated temperature sensor to the communication device.

A communication device according to the present invention includes a speaker, a microphone, and a processor operatively arranged for calculating ambient temperature by playing a test sound on the speaker, measuring a transit time of the test sound from the speaker to the microphone, and calculating the ambient temperature from the measured transit time.

A method according to the present invention for calculating ambient temperature of a communication device having a speaker and a microphone, includes the steps of playing a test sound on the speaker, measuring a transit time of the test sound from the speaker to the microphone, and calculating an ambient temperature based on the measured transit time.

Other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

### BRIEF DESCRIPTION OF THE DRAWINGS

Fig. 1 is a schematic block diagram of a communication device according to the present invention;
Fig. 2 is a flow diagram showing steps for determining ambient temperature according to the present invention; and
Fig. 3 is a flow diagram showing further steps of the present invention.

### DETAILED DESCRIPTION OF THE PRESENTLY PREFERRED EMBODIMENTS

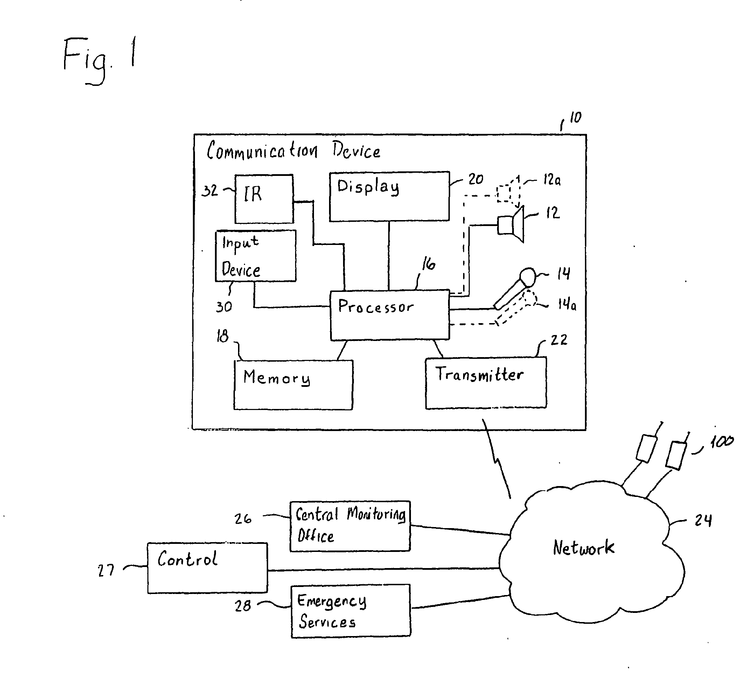

Fig. 1 shows a mobile communication device 10 including a speaker 12 and a microphone 14. The communication device 10 may comprise a wireless mobile phone for communicating with other communication devices 100 through a communication network 24. For this purpose, the communication device 10 includes a processor 16 for processing received communication signals into audio signals and for generating audio signals, and a transceiver 22 for sending and receiving communication signals. Instead of a wireless mobile phone, the communication device may comprise any mobile or stationary communication device having a speaker and a microphone such as a PDA, laptop or desktop computer. As will be described below in more detail, the speaker 12 and microphone 14 must be separated by at least a minimum distance from each other in the operating state of the device.

The communication device 10 also includes a display 20 for displaying information to a user of the communication device 10, a memory 18, and an input device 30 such as the numerical keyboard and/or other input keys on a typical mobile phone. The input keys may be hard wired to have specific functions such as the numerical keys on a keypad, or the input keys may be soft keys having different functions in different operating states of the communication device.

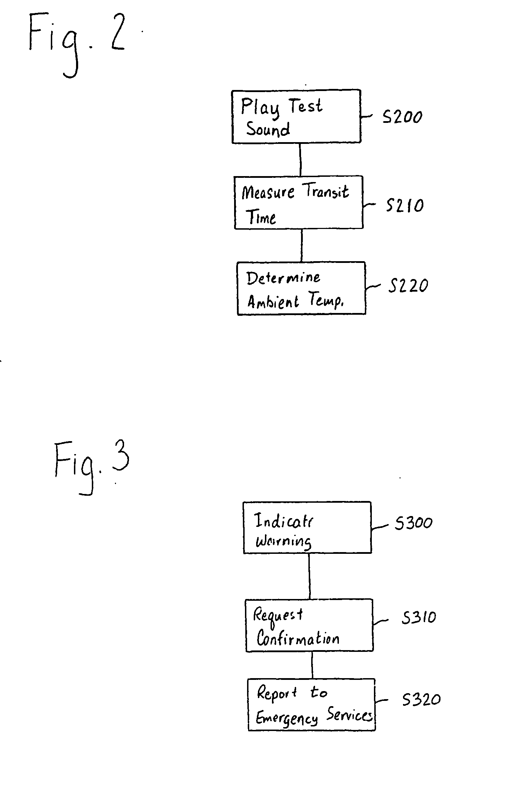

The communication device 10 includes the ability to determine ambient temperature using the method illustrated in the flow diagram of Fig. 2. According to the inventive method, a test signal is generated by processor 16 or retrieved from memory 18 and is played on the speaker 12, step S200. The transit time of the test sound from the speaker 12 until detection occurs at the microphone 14 is measured by the processor 16, step S210. The ambient temperature is then calculated by the processor based on the transit time of the test sound, S220. The calculated ambient temperature may then be displayed on the display 20.

The present invention relies on the principle that as air temperature varies, its density varies. The change in air density causes the speed of sound to vary according to the formula: v=331 $v = 331\sqrt{T/273°}\ m/sec.$ , , where T is the temperature in °K. The time required for sound to travel a known distance varies as a function of the air temperature according to the formula $t = \dfrac{x}{v}$ , where x is the distance between the speaker and the microphone and v is the speed of sound. Accordingly, the velocity v, and thus the temperature T, may be calculated from the above formulas using the transit time measured in step S210 and the known distance. If two microphones located at different distances from the source of sound are used, each microphone will detect the sound at a different time based on the time required for the sound to travel to each microphone. As described below, the difference between the times of detection at the two microphones may be used to determine the velocity.

The speaker 12 may have an associated delay inherent in a transducer of the speaker 12. This delay may be mitigated in devices having more than one microphone such as, for example, desk phones having a handset with a first microphone 14 and first speaker 12 and a second microphone 14a and speaker 12a on the phone console for hand-free or "speakerphone" operation. Fig. 1 shows the optional second microphone 14a and second speaker 12a in dotted lines. According to this embodiment, the test signal is played on one of the speakers 12,12a in step S200. In step S210, the transit time of the test sound until detection at each of the microphones 14, 14a is measured by the processor 16. The velocity v and thus the temperature T may be solved by

$$(t_2 - t_1) = \frac{\chi_2 - \chi_1}{v}, \quad \text{or } v = \frac{\chi_2 - \chi_1}{t_2 - t_1} \text{ ,wherein}$$

$x_1$ is the distance between the first microphone 14 and the speaker 12 or 12a, $x_2$ is the distance between the second microphone 14a and the speaker 12 or 12a, and $t_2 - t_1$ is the difference in time between the time of reception of the test signal at the first and second microphones 14 and 14a. Instead of measuring the transit times from initiation of the test sound to reception at each microphone, the time between detection by each of the microphones may be measured in step S210. The time between detection by each microphone may be determined by direct measurement of the time between the detection occurrences. Alternatively, the time between detection may be determined based on a transfer function between the two microphones, i.e., based on phase versus frequency. Since the above calculation is based on the time difference between reception at each microphone, any static or variable time delay introduced by the speaker is avoided by this calculation.

The distance between the speaker 12 and microphone 14 (and/or microphone 14a) of the communication device 10 is a fixed quantity and may be saved into the memory 18. Alternatively, the distance between the speaker and microphone may be derived when a reference temperature is known. For deriving the distance between the speaker and the microphone, the speed of sound is known at a known temperature and the distance can be determined using the transit time of the test sound between the speaker and microphone.

The temperature calculation feature can be performed periodically by the processor, e.g., every five minutes, etc. Alternatively, the temperature can be calculated in response to a specific user command input by the user via the input device 30 of the communication device.

Once the temperature calculation is desired, it can be transmitted by the communication device to a recipient device system. For example, the temperature measurement can be communicated automatically by the communication device to one or more other devices in communication with the communication device 10. In the case of a communication device comprising a mobile phone, the temperature calculation by a first mobile phone (phone A) can be transmitted to a second mobile phone (phone B), either at the time a call is connected or upon selecting an appropriate function key on phone A.

Furthermore, some communication devices such as PDAs or mobile phones include infrared (IR) sensors 32 (see Fig. 1) for IR communications with other devices. The IR sensors may be monitored by the processor 16 for signals indicative of a fire. When a signal indicative of the fire is received, the processor 16 may initiate a determination of the ambient temperature using the above described method as a confirmation of a fire and may transmit the temperature calculation to fire fighting or fire detecting personnel. As described in more detail below, the communication device may include a location of the communication device in the transmission to fire fighting or fire detecting personnel.

As shown in Fig. 3, the method may provide a warning indication (audio and/or visual) if the ambient temperature exceeds a threshold, step S300. The threshold may indicate that the operating temperature exceeds a safe operating range of the communication device 10 or a safe operating range of other devices located in proximity to the communication device. The communication device 10 may additionally automatically transmit a warning signal to a central monitoring office 26 (see Fig. 1) through communication network 24. Furthermore, the communication device 10 may transmit a control signal to a control device 27 to counteract the out of range temperature condition. For example, the communication device 10 may be a computer having a speaker and microphone stationed in a room having manufacturing equipment which is required to operate within a desired temperature range. If the room temperature as calculated by the computer exceeds the upper or lower limits of the temperature range, the communication device visually or audibly indicates a warning so that an operator in the room is made aware of the problem. The communication device may additionally transmit a control signal through the network 24 to the control device 27, which may include a heating/cooling system or a supplemental heating/cooling system for the room to counter the out of range temperature condition. The network 24 may comprise a local area network (LAN) or a wide area network (WAN) and may be wired or wireless.

Instead of determining whether the ambient temperature is within an operating range, a threshold level may be set on the communication device 10 to indicate a possible fire condition. If the communication device 10 is a mobile device normally carried by the user, or is any device which is normally attended by a person, a request for a confirmation that there is an actual fire may be visually displayed or audibly transmitted to the user, step S310. Once the confirmation by the user is received, the communication device 10 may transmit a report to emergency services 28 through the network 24 (see Fig. 1), step S320. In addition, or alternatively, the communication device 10 may also monitor the rate of temperature change between successive determinations of the ambient temperature. In this case, a steep climb in the ambient temperature may be considered indicative of a fire and the steps S310, and S320 may be performed in response to the high rate of temperature change.

Service providers of wireless communications networks typically provide location services for their customers which determine a location of the customer's wireless device so that information related to the immediate surroundings of the customer may be provided to the customer. If the communication device is a mobile phone, PDA or other mobile device which uses location services, the report transmitted to the emergency service in step S320 may include a location of the communication device which is derived from the location services of the communication device.

The communication device 10 according to the present invention may be used as a supplement or a replacement of environment monitoring devices such as thermostats, fire control sensors, and desktop thermometers. A plurality of essentially stationary ones of the communication devices 10 may be arranged throughout a building or other area and used for mapping temperatures throughout the building or other area. Such maps may be used for verifying proper operation of HVAC systems.

Thus, while there have been shown and described and pointed out fundamental novel features of the invention as applied to a preferred embodiment thereof, it is the intention, to be limited only as indicated by the scope of the claims appended hereto.

**Claims**

1. A communication device, comprising:

   a speaker;
   a microphone disposed at a distance from said speaker; and
   a processor connected to said speaker and said microphone and operatively arranged for determining ambient temperature by causing a test sound to be played on said speaker, measuring a transit time of the test sound from said speaker to said microphone, and calculating an ambient temperature of an environment in which the communication device is disposed from the measured transit time.

2. The communication device of claim 1, wherein said processor calculates the ambient temperature periodically.

3. The communication device of claim 1, further comprising an input device connected to said processor, wherein said processor determines the ambient temperature in response to a command input to said input device.

4. The communication device of claim 1, further including a memory connected to said processor for storing the distance from said speaker to said microphone.

5. The communication device of claim 1, wherein said processor includes means for deriving the distance from the speaker to the microphone at a reference temperature.

6. The communication device of claim 1, further comprising a display for visually conveying the calculated ambient temperature to a user of the communication device.

7. The communication device of claim 1, further comprising means for indicating to a user when the calculated ambient temperature exceeds a threshold temperature.

8. The communication device of claim 1, further comprising means for announcing a possible fire condition to a user of the communication device when the calculated ambient temperature exceeds a high threshold temperature.

9. The communication device of claim 8, further comprising means for requesting confirmation of the fire from the user of the communication device.

10. The communication device of claim 9, further comprising a transmitter for automatically sending a report to emergency services upon receipt of the confirmation of the fire by the user.

11. The communication device of claim 10, wherein said transmitter also sends a location of the communication device to the emergency services, the location derived from location services of said communication device.

12. The communication device of claim 1, further comprising a transmitter for automatically sending a report to emergency services when said processor determines an ambient temperature outside of an operating range.

13. The communication device of claim 12, wherein said transmitter also sends a location of the communication device to the emergency services, the location derived from location services of said communication device.

14. The communication device of claim 1, further comprising a transmitter for automatically sending a control signal to a heating/cooling system when said processor calculates an ambient temperature outside of an operating range.

15. The communication device of claim 1, further comprising an infrared sensor connected to said processor for detection of signals indicative of a fire, said processor initiating a determination of the ambient temperature in response to receiving a signal indicative of a fire from said infrared sensor.

16. The communication device of claim 1, wherein said communication device is a mobile phone.

17. The communication device of claim 1, wherein said communication device is operatively arranged for sending a signal indicating the determined ambient temperature to a second communication device during communication with the second communication device, said signal being sent automatically or in response to a user input.

18. A communication device, comprising:

a speaker;
a first microphone disposed at a first distance from said speaker;
a second microphone disposed at a second distance from said speaker; and
a processor connected to said speaker and said first.and second microphones and operatively arranged for determining ambient temperature by causing a test sound to be played on said speaker, measuring the time between reception of the test sound at said first microphone and reception of the test sound at said second microphone, and calculating an ambient temperature of an environment in which the communication device is disposed from the measured time.

19. The communication device of claim 18, wherein said processor measures a transit time of the test sound from said speaker to said first and second microphone and calculates the ambient temperature from the difference between transit times of the test sound to said first microphone and to said second microphone.

20. A method for calculating ambient temperature of a communication device having a speaker and a microphone disposed from the speaker, comprising the steps of:

playing a test sound on the speaker;
measuring a transit time of the test sound from the speaker to the microphone; and
calculating an ambient temperature based on the measured transit time.

21. The method of claim 20, wherein said step of calculating comprises calculating the ambient temperature periodically.

22. The method of claim 20, wherein the communication device includes an input device and said step of calculating comprises calculating the ambient temperature in response to said input device.

23. The method of claim 20, wherein said means for calculating ambient temperature includes a memory and said method further comprises the step of storing a distance from the speaker to the microphone in said memory.

24. The method of claim 20, further comprising the step of deriving the distance from the speaker to the microphone at a reference temperature.

25. The method of claim 20, further comprising the step of displaying the determined ambient temperature on a display of the communication device.

26. The method of claim 20, further comprising the step of providing an indication to a user when the calculated ambient temperature exceeds a threshold temperature.

27. The method of claim 20, further comprising the step of announcing a possible fire condition to a user of the communication device when the calculated ambient temperature exceeds a high threshold temperature.

28. The method of claim 27, further comprising the step of requesting confirmation of the fire condition from the user of the communication device.

29. The method of claim 28, further comprising the step of automatically transmitting a report to emergency services upon receipt of the confirmation of the fire by the user.

30. The method of claim 29, further comprising the step of sending a location of the communication device to the emergency services, the location derived from location services of the communication device.

31. The method of claim 20, further comprising the step of automatically sending a report to emergency services when the calculated ambient temperature exceeds a high threshold.

32. The method of claim 31, further comprising the step of sending a location of the communication device to the emergency services, the location derived from location services of the communication device.

33. The method of claim 20, further comprising the step of automatically sending a control signal to a heating/cooling unit when the calculated ambient temperature is outside of an operating range.

34. The method of claim 20, wherein the communication device further comprises an infrared sensor and said method further comprises the step of using the infrared sensor for detecting a condition indicative of a fire.

35. The method of claim 20, wherein said method is performed on a plurality of communication devices located throughout a building or other area for mapping temperatures throughout the building or other area.

36. The method of claim 20, further comprising the step of automatically sending the determined ambient temperature to a second communication device upon initiation of communications with the second communication device.

37. The method of claim 20, further comprising the step of sending the determined ambient temperature to a second communication device in response to a user command.

38. A method for calculating ambient temperature of a communication device having a speaker, a first microphone disposed at a first distance from the speaker, and a second microphone disposed at a second distance from the speaker, comprising the steps of:

playing a test sound on the speaker;
measuring the time between reception of the test sound at the first microphone and reception of the test sound at the second microphone; and
calculating an ambient temperature based on the measured time.

39. The method of claim 38, wherein said step of calculating comprising calculating the ambient temperature from the difference between the transit times to the first microphone and to the second microphone.

**Patentansprüche**

1. Fernmeldevorrichtung, umfassend:

einen Lautsprecher;
ein Mikrofon, welches in einer Entfernung von dem Lautsprecher angeordnet ist; und
einen Prozessor, welcher mit dem Lautsprecher und dem Mikrofon verbunden und geeignet eingerichtet ist, um eine Umgebungstemperatur durch Bewirken, dass ein Prüfton über den Lautsprecher abgespielt wird, Messen einer Laufzeit des Prüftons von dem Lautsprecher zu dem Mikrofon und Berechnen einer Umgebungstemperatur einer Umgebung, worin sich die Fernmeldevorrichtung befindet, aus der gemessenen Laufzeit zu bestimmen.

2. Fernmeldevorrichtung nach Anspruch 1, wobei der Prozessor die Umgebungstemperatur periodisch berechnet.

3. Fernmeldevorrichtung nach Anspruch 1, ferner umfassend eine Eingabevorrichtung, welche mit dem Prozessor verbunden ist, wobei der Prozessor die Umgebungstemperatur in Reaktion auf eine Befehlseingabe in die Eingabevorrichtung bestimmt.

4. Fernmeldevorrichtung nach Anspruch 1, ferner umfassend einen Speicher, welcher mit dem Prozessor verbunden ist, zum Speichern der Entfernung von dem Lautsprecher zu dem Mikrofon.

5. Fernmeldevorrichtung nach Anspruch 1, wobei der Prozessor Hilfsmittel zum Ableiten der Entfernung von dem Lautsprecher zu dem Mikrofon bei einer Referenztemperatur umfasst.

6. Fernmeldevorrichtung nach Anspruch 1, ferner umfassend eine Anzeige zum visuellen Übermitteln der berechneten Umgebungstemperatur zu einem Benutzer der Fernmeldevorrichtung.

7. Fernmeldevorrichtung nach Anspruch 1, ferner umfassend eine Einrichtung zum Melden, wenn die berechnete Umgebungstemperatur eine Schwellenwertstemperatur überschreitet, an einen Benutzer.

8. Fernmeldevorrichtung nach Anspruch 1, ferner umfassend eine Einrichtung zum Melden eines möglichen Feuerzustands an einen Verwender der Fernmeldevorrichtung, wenn die berechnete Umgebungstemperatur eine hohe Schwellenwertstemperatur überschreitet.

9. Fernmeldevorrichtung nach Anspruch 8, ferner umfassend eine Einrichtung zum Anfordern einer Bestätigung des Feuers von dem Benutzer der Fernmeldevorrichtung.

10. Fernmeldevorrichtung nach Anspruch 9, ferner umfassend einen Sender zum automatischen Senden eines Berichts zu Notfalldiensten bei Empfang der Bestätigung des Feuers durch einen Benutzer.

11. Fernmeldevorrichtung nach Anspruch 10, wobei der Sender ferner eine Ortsbestimmung der Fernmeldevorrichtung zu den Notfalldiensten sendet, wobei die Ortsbestimmung von Ortsbestimmungsdienstleistungen der Fernmeldevorrichtung abgeleitet ist.

12. Fernmeldevorrichtung nach Anspruch 1, ferner umfassend einen Sender zum automatischen Senden eines Berichts zu Notfalldiensten, wenn der Prozessor eine Umgebungstemperatur ausserhalb eines Betriebsbereichs bestimmt.

13. Fernmeldevorrichtung nach Anspruch 12, wobei der Sender ferner eine Ortsbestimmung der Fernmeldevorrichtung zu den Notfalldiensten sendet, wobei die Ortsbestimmung von Ortsbestimmungsdienstleistungen der Fernmeldevorrichtung abgeleitet ist.

14. Fernmeldevorrichtung nach Anspruch 1, ferner umfassend einen Sender zum automatischen Senden eines Steuersignals zu einem Heiz-/Kühlsystem, wenn der Prozessor eine Umgebungstemperatur ausserhalb eines Betriebsbereichs berechnet.

15. Fernmeldevorrichtung nach Anspruch 1, ferner umfassend einen Infrarotsensor, welcher mit dem Prozessor verbunden ist, zur Erfassung von Signalen, welche auf ein Feuer hinweisen, wobei der Prozessor eine Bestimmung der Umgebungstemperatur in Reaktion auf ein Empfangen eines Signals, welches auf ein Feuer hinweist, von dem Infrarotsensor auslöst.

16. Fernmeldevorrichtung nach Anspruch 1, wobei die Fernmeldevorrichtung ein Mobiltelefon ist.

17. Fernmeldevorrichtung nach Anspruch Fernmeldevorrichtung 1, wobei die Fernmeldevorrichtung geeignet eingerichtet ist, um ein Signal, welches die bestimmte Umgebungstemperatur angibt, zu einer zweiten Fernmeldevorrichtung während einer Kommunikation mit der zweiten Fernmeldevorrichtung zu senden, wobei das Signal automatisch oder in Reaktion auf eine Bedienereingabe gesendet wird.

18. Fernmeldevorrichtung, umfassend:

   einen Lautsprecher;
   ein erstes Mikrofon, welches in einer ersten Entfernung von dem Lautsprecher angeordnet ist;
   ein zweites Mikrofon, welches in einer zweiten Entfernung von dem Lautsprecher angeordnet ist; und
   einen Prozessor, welcher mit dem Lautsprecher und dem ersten und dem zweiten Mikrofon verbunden ist und geeignet eingerichtet ist, um eine Umgebungstemperatur durch Bewirken, dass ein Prüfton über den Lautsprecher abgespielt wird, Messen der Zeit zwischen einem Empfang des Prüftons bei dem ersten Mikrofon und einem Empfang des Prüftons bei dem zweiten Mikrofon und Berechnen einer Umgebungstemperatur einer Umgebung, worin sich die Fernmeldevorrichtung befindet, aus der gemessenen Zeit zu bestimmen.

19. Fernmeldevorrichtung nach Anspruch 18, wobei der Prozessor eine Laufzeit des Prüftons von dem Lautsprecher zu dem ersten und dem zweiten Mikrofon misst und die Umgebungstemperatur aus der Differenz zwischen den Laufzeiten des Prüftons zu dem ersten Mikrofon und zu dem zweiten Mikrofon berechnet.

20. Verfahren zum Berechnen einer Umgebungstemperatur einer Fernmeldevorrichtung, welche einen Lautsprecher und ein Mikrofon, welches in Entfernung von dem Lautsprecher angeordnet ist, umfasst, umfassend die Schritte:

Abspielen eines Prüftons über den Lautsprecher;

Messen einer Laufzeit des Prüftons von dem Lautsprecher zu dem Mikrofon; und

Berechnen einer Umgebungstemperatur auf Basis der gemessenen Laufzeit.

21. Verfahren nach Anspruch 20, wobei der Schritt des Berechnens ein periodisches Berechnen der Umgebungstemperatur umfasst.

22. Verfahren nach Anspruch 20, wobei die Fernmeldevorrichtung eine Eingabevorrichtung umfasst und der Schritt des Berechnens das Berechnen der Umgebungstemperatur in Reaktion auf die Eingabevorrichtung umfasst.

23. Verfahren nach Anspruch 20, wobei die Einrichtung zum Berechnen der Umgebungstemperatur einen Speicher umfasst und das Verfahren ferner den Schritt des Speicherns einer Entfernung von dem Lautsprecher zu dem Mikrofon in dem Speicher umfasst.

24. Verfahren nach Anspruch 20, ferner umfassend den Schritt des Ableitens der Entfernung von dem Lautsprecher zu dem Mikrofon bei einer Referenztemperatur.

25. Verfahren nach Anspruch 20, ferner umfassend den Schritt des Anzeigens der bestimmten Umgebungstemperatur auf einer Anzeige der Fernmeldevorrichtung.

26. Verfahren nach Anspruch 20, ferner umfassend den Schritt des Vorsehens einer Anzeige für einen Benutzer, wenn die berechnete Umgebungstemperatur eine Schwellenwertstemperatur überschreitet.

27. Verfahren nach Anspruch 20, ferner umfassend den Schritt des Meldens eines möglichen Feuerzustands an einen Benutzer der Fernmeldevorrichtung, wenn die berechnete Umgebungstemperatur eine hohe Schwellenwertstemperatur überschreitet.

28. Verfahren nach Anspruch 27, ferner umfassend den Schritt des Anforderns einer Bestätigung des Feuerzustands von dem Verwender der Fernmeldevorrichtung.

29. Verfahren nach Anspruch 28, ferner umfassend den Schritt eines automatischen Übertragens eines Berichts zu Notfalldiensten bei Empfang der Bestätigung des Feuers durch den Benutzer.

30. Verfahren nach Anspruch 29, ferner umfassend den Schritt des Sendens einer Ortsbestimmung der Fernmeldevorrichtung zu den Notfalldiensten, wobei die Ortsbestimmung von Ortsbestimmungsdienstleistungen der Fernmeldevorrichtung abgeleitet ist.

31. Verfahren nach Anspruch 20, ferner umfassend den Schritt eines automatischen Sendens eines Berichts zu Notfalldiensten, wenn die berechnete Umgebungstemperatur einen hohen Schwellenwert überschreitet.

32. Verfahren nach Anspruch 31, ferner umfassend den Schritt des Sendens einer Ortsbestimmung der Fernmeldevorrichtung zu den Notfalldiensten, wobei die Ortsbestimmung von Ortsbestimmungsdienstleistungen der Fernmeldevorrichtung abgeleitet ist.

33. Verfahren nach Anspruch 20, ferner umfassend den Schritt eines automatischen Sendens eines Steuersignals zu einer Heiz-/Kühleinheit, wenn sich die berechnete Umgebungstemperatur ausserhalb eines Betriebsbereichs befindet.

34. Verfahren nach Anspruch 20, wobei die Fernmeldevorrichtung ferner einen Infrarotsensor umfasst und das Verfahren ferner den Schritt des Verwendens des Infrarotsensors zum Erfassen eines Zustands, welcher auf ein Feuer hinweist, umfasst.

35. Verfahren nach Anspruch 20, wobei das Verfahren auf einer Vielzahl von Fernmeldevorrichtung durchgeführt wird, welche in einem gesamten Gebäude oder einem anderen Bereich angeordnet sind, um Temperaturen in dem gesamten Gebäude oder einem anderen Bereich aufzulisten.

36. Verfahren nach Anspruch 20, ferner umfassend den Schritt eines automatischen Sendens der bestimmten Umgebungstemperatur zu einer zweiten Fernmeldevorrichtung bei Beginn einer Kommunikation mit der zweiten Fernmeldevorrichtung.

37. Verfahren nach Anspruch 20, ferner umfassend den Schritt des Sendens der bestimmten Umgebungstemperatur zu einer zweiten Fernmeldevorrichtung in Reaktion auf einen Benutzerbefehl.

38. Verfahren zum Berechnen einer Umgebungstemperatur einer Fernmeldevorrichtung, welche einen Lautsprecher, ein erstes Mikrofon, welches in einer ersten Entfernung von dem Lautsprecher angeordnet ist, und ein zweites Mikrofon, welches in einer zweiten Entfernung von dem Lautsprecher angeordnet ist, aufweist, umfassend die Schritte:

Abspielen eines Prüftons über den Lautsprecher;

Messen der Zeit zwischen einem Empfang des Prüftons bei dem ersten Mikrofon und einem Empfang des Prüftons bei dem zweiten Mikrofon; und

Berechnen einer Umgebungstemperatur auf Basis der gemessenen Zeit.

**39.** Verfahren nach Anspruch 38, wobei der Schritt des Berechnens das Berechnen der Umgebungstemperatur aus der Differenz zwischen den Laufzeiten zu dem ersten Mikrofon und zu dem zweiten Mikrofon umfasst.


**Revendications**

**1.** Dispositif de communication, comportant :

un haut-parleur,

un microphone disposé à une distance dudit haut-parleur, et

un processeur connecté audit haut-parleur et audit microphone et opérationnellement disposé pour déterminer la température ambiante en provoquant la génération d'un son d'essai sur ledit haut-parleur, pour mesurer un temps de transit du son d'essai dudit haut-parleur audit microphone et calculer, à partir du temps de transit, une température ambiante d'un environnement dans lequel est disposé le dispositif de communication.

**2.** Dispositif de communication selon la revendication 1, dans lequel ledit processeur calcule périodiquement la température ambiante.

**3.** Dispositif de communication selon la revendication 1, comportant en outre un dispositif d'entrée connecté audit processeur, dans lequel ledit processeur détermine la température ambiante en réponse à une saisie de commande audit dispositif de commande.

**4.** Dispositif de communication selon la revendication 1, comportant en outre une mémoire connectée audit processeur pour stocker la distance entre ledit haut-parleur et ledit microphone.

**5.** Dispositif de communication selon la revendication 1, dans lequel ledit processeur comporte des moyens pour dériver la distance du haut-parleur au microphone à la température de référence.

**6.** Dispositif de communication selon la revendication 1, comportant en outre un afficheur pour transporter visuellement la température ambiante calculée vers un utilisateur du dispositif de communication.

**7.** Dispositif de communication selon la revendication 1, comportant en outre des moyens pour signaler à un utilisateur tout dépassement d'une température seuil par la température ambiante calculée.

**8.** Dispositif de communication selon la revendication 1, comportant en outre des moyens pour annoncer à un utilisateur du dispositif de communication une condition de feu possible lorsque la température ambiante calculée dépasse une température seuil élevée.

**9.** Dispositif de communication selon la revendication 8, comportant en outre des moyens pour demander à l'utilisateur du dispositif de communication la confirmation de la confirmation du feu.

**10.** Dispositif de communication selon la revendication 9, comportant en outre un émetteur pour émettre automatiquement un procès-verbal aux services de secours d'urgence s'il reçoit la confirmation du feu par l'utilisateur du dispositif de communication.

**11.** Dispositif de communication selon la revendication 10, dans lequel ledit émetteur envoie également la position du dispositif de communication aux services de secours d'urgence, ladite position étant dérivée des services de localisation dudit dispositif de communication.

**12.** Dispositif de communication selon la revendication 1, comportant en outre un émetteur pour envoyer automatiquement un procès-verbal aux services de secours d'urgence lorsque ledit processeur détermine une température ambiante située hors d'une plage de fonctionnement.

**13.** Dispositif de communication selon la revendication 12, dans lequel ledit émetteur envoie également la position du dispositif de communication aux services de secours d'urgence, ladite position étant dérivée des services de localisation dudit dispositif de communication.

**14.** Dispositif de communication selon la revendication 1, comportant en outre un émetteur pour envoyer automatiquement un signal de commande à un système de chauffage/de refroidissement lorsque ledit processeur calcule une température ambiante située hors d'une plage de fonctionnement.

**15.** Dispositif de communication selon la revendication 1, comportant en outre un capteur infrarouge connecté audit processeur pour détecter des signaux indicateurs de feu, ledit processeur initiant une détermination de la température ambiante en réponse à la réception d'un signal indicateur de feu à partir dudit capteur infrarouge.

**16.** Dispositif de communication selon la revendication 1, dans lequel ledit dispositif de communication est un téléphone cellulaire.

**17.** Dispositif de communication selon la revendication 1, dans lequel ledit dispositif de communication est opérationnellement disposé pour envoyer un signal indiquant la température ambiante déterminée à un second dispositif de communication pendant la communication avec ledit second dispositif de communication, ledit signal étant envoyé automatiquement ou en réponse à une entrée de l'utilisateur.

**18.** Dispositif de communication, comportant :

un haut-parleur,
un premier microphone disposé à une première distance dudit haut-parleur,
un second microphone disposé à une seconde distance dudit haut-parleur, et
un processeur connecté audit haut-parleur et auxdits premier et second microphones et opérationnellement disposé pour déterminer la température ambiante en provoquant la génération d'un son d'essai sur ledit haut-parleur, pour mesurer un temps entre la réception dudit son d'essai audit premier microphone et la réception dudit son d'essai audit second microphone et calculer, à partir du temps mesuré, une température ambiante d'un environnement dans lequel est disposé le dispositif de communication.

**19.** Dispositif de communication selon la revendication 18, dans lequel ledit processeur mesure un temps de transit du son d'essai dudit haut-parleur auxdits premier et second microphones et calcule la température ambiante à partir de la différence entre les temps de transit du son d'essai jusqu'audit premier microphone et jusqu'audit second microphones.

**20.** Méthode pour calculer la température ambiante d'un dispositif de communication possédant un haut-parleur et un microphone disposé à une distance dudit haut-parleur, comprenant les étapes :

de génération d'un son d'essai sur le haut-parleur,
de mesure du temps de transit du son d'essai dudit haut-parleur au microphone, et
de calcul d'une température ambiante sur la base du temps de transit mesuré.

**21.** Méthode selon la revendication 20, dans laquelle l'étape de calcul comprend le calcul périodique de la température ambiante.

**22.** Méthode selon la revendication 20, dans laquelle le dispositif de communication comporte un dispositif d'entrée et dans laquelle ladite étape de calcul comprend le calcul de la température ambiante en réponse audit dispositif d'entrée.

**23.** Méthode selon la revendication 20, dans laquelle lesdits moyens de calcul de la température ambiante comprennent une mémoire et dans laquelle ladite méthode comprend en outre l'étape de stockage, dans ladite mémoire, de la distance dudit haut-parleur audit microphone.

**24.** Méthode selon la revendication 20, comprenant en outre l'étape de dérivation de la distance dudit haut-parleur audit microphone à une température de référence.

**25.** Méthode selon la revendication 20, comprenant en outre l'étape d'affichage de la température ambiante déterminée sur un afficheur du dispositif de communication.

**26.** Méthode selon la revendication 20, comprenant en outre l'étape de fourniture d'une indication à un utilisateur lorsque la température ambiante calculée dépasse une température seuil.

**27.** Méthode selon la revendication 20, comprenant en outre l'étape d'annonce, à un utilisateur du dispositif de communication, une condition de feu possible lorsque la température ambiante calculée dépasse une température seuil élevée.

**28.** Méthode selon la revendication 27, comprenant en outre l'étape de demande, à l'utilisateur du dispositif de communication, de la confirmation de la confirmation de feu.

**29.** Méthode selon la revendication 28, comprenant en outre l'étape d'émission automatique d'un procès-verbal aux services de secours d'urgence dans le cas de la réception de la confirmation du feu par l'utilisateur du dispositif de communication.

**30.** Méthode selon la revendication 29, comprenant en outre l'étape d'émission de la position du dispositif de communication aux services de secours d'urgence, ladite position étant dérivée des services de localisation dudit dispositif de communication.

**31.** Méthode selon la revendication 20, comprenant en outre l'étape d'émission automatique d'un procès-verbal à des services de secours d'urgence lorsque la température ambiante calculée dépasse une température seuil élevée.

**32.** Méthode selon la revendication 31, comprenant en outre l'étape d'émission de la position du dispositif de communication aux services de secours d'urgence, ladite position étant dérivée des services de localisation dudit dispositif de communication.

**33.** Méthode selon la revendication 20, comprenant en outre l'étape d'envoi automatique d'un signal de commande à une unité de chauffage/de refroidissement lorsque la température ambiante calculée est située hors d'une plage de fonctionnement.

**34.** Méthode selon la revendication 20, dans laquelle le dispositif de communication comporte en outre un capteur infrarouge et dans laquelle ladite méthode comprend en outre l'étape d'utilisation dudit capteur infrarouge pour détecter une condition indicatrice d'un feu.

**35.** Méthode selon la revendication 20, dans laquelle ladite méthode est mise en application sur une pluralité de dispositifs de communication situés à travers un bâtiment ou à travers une autre zone pour le mappage des températures à travers le bâtiment ou les autres zones.

**36.** Méthode selon la revendication 20, comprenant en outre l'étape d'envoi automatique de la température ambiante déterminée à un second dispositif de communication dès l'initiation des communications avec ledit second dispositif de communication.

**37.** Méthode selon la revendication 20, comprenant en outre l'étape d'envoi de la température ambiante déterminée à un second dispositif de communication en réponse à une commande de l'utilisateur.

**38.** Méthode pour calculer la température ambiante d'un dispositif de communication possédant un haut-parleur, un premier microphone disposé à une première distance dudit haut-parleur et un second microphone disposé à une seconde distance dudit haut-parleur, et comprenant les étapes :

de génération d'un son d'essai sur le haut-parleur,
de mesure du temps entre la réception du son d'essai audit premier microphone et la réception du son d'essai audit second microphone, et
de calcul d'une température ambiante sur la base du temps mesuré.

**39.** Méthode selon la revendication 38, dans laquelle ladite étape de calcul comprend le calcul de la température ambiante à partir de la différence entre les temps de transit jusqu'audit premier microphone et jusqu'audit second microphone.

Fig. 1

Communication Device

32 — IR

Display ~ 20

12a

12

Input Device

30

16

Processor

14

14a

18

Memory

Transmitter ~ 22

10

100

26 — Central Monitoring Office

27 — Control

28 — Emergency Services

Network

24

EP 1 591 764 B1

Fig. 2

```
┌─────────────┐
│ Play Test   │─ S200
│ Sound       │
└──────┬──────┘
       │
┌──────┴──────┐
│ Measure Transit │─ S210
│ Time        │
└──────┬──────┘
       │
┌──────┴──────┐
│ Determine   │─ S220
│ Ambient Temp. │
└─────────────┘
```

Fig. 3

```
┌─────────────┐
│ Indicatr    │─ S300
│ Warning     │
└──────┬──────┘
       │
┌──────┴──────┐
│ Request     │─ S310
│ Confirmation │
└──────┬──────┘
       │
┌──────┴──────┐
│ Report to   │─ S320
│ Emergency Services │
└─────────────┘
```